# EUROPEAN PATENT APPLICATION

(11) **EP 1 650 162 A1**
(43) Date of publication of application: **26.04.2006**
(21) Application number: 04746118.1
(22) Date of filing: 18.06.2004
(51) Int. Cl.: C01B 31/20, B01D 53/62

(54) **SYSTEM AND METHOD FOR COLLECTING CARBON DIOXIDE IN EXHAUST GAS**

(30) Priority: 18.06.2003 JP 2003173967
(71) Applicant: KABUSHIKI KAISHA TOSHIBA, Tokyo 105-8001 (JP)
(72) Inventor: MORIYAMA, Hideshige Intellectual Property Division, Minato-ku Tokyo 1058001 (JP); MATSUNAGA, Kentaro, Intellectual Property Division, Minatoo-ku Tokyo 1058001 (JP); FUKUDA, Masafumi, Intellectual Property Division, Minato-ku Tokyo 1058001 (JP)
(74) Representative: HOFFMANN EITLE
(86) International application number: PCT/JP2004/008616
(87) International publication number: WO 2004/113226

(57) **Abstract**

A system and a method for recovery of carbon dioxide in exhaust gas, wherein a liquid absorbent (116) jetted from a liquid absorbent jetting part (101) comes into gas-liquid contact with exhaust gas (114) flowing through a packing (102) from the lower side to the upper side to absorb the carbon dioxide contained in the exhaust gas (114). The flow of the liquid absorbent (116) in a deposition vessel (11) conditioned to a specified pH value is stopped to deposit insoluble compounds as the reaction product of the liquid absorbent (116) against the carbon dioxide, and the carbon dioxide is collected as the insoluble compounds. Thus, the carbon dioxide can be removed from the liquid absorbent which absorbed the carbon dioxide without using steam from a power generating boiler.

## Description

### TECHNICAL FIELD

The present invention relates to a carbon dioxide recovery system for recovering carbon dioxide contained in exhaust gas discharged from thermal power stations, municipal waste incineration plants and the like, and more particularly to a system and a method for recovery of carbon dioxide contained in exhaust gas that can recover the carbon dioxide by an alkaline liquid absorbent.

### BACKGROUND ART

In these years, significant concerns in connection with combustion products from the burning of fossil fuels include a global warming issue caused by greenhouse gases such as carbon dioxide. According to the Kyoto Protocol to the United Nations Framework Convention on Climate Change, Japan is required to reduce the greenhouse gas emission through the years 2008-2012 to a level 6% below the total emission in 1990. However, Japan is already in a severe situation that full efforts must be exerted to achieve the target because the emission has increased by 8% as of the year 2000.

Under the circumstances as described above, there is proposed a carbon dioxide recovery system for recovering carbon dioxide contained in exhaust gas exhausted from thermal power stations, municipal waste incineration plants and the like by using, for example, an amine solution as a carbon dioxide liquid absorbent (e.g., see Patent Document 1).

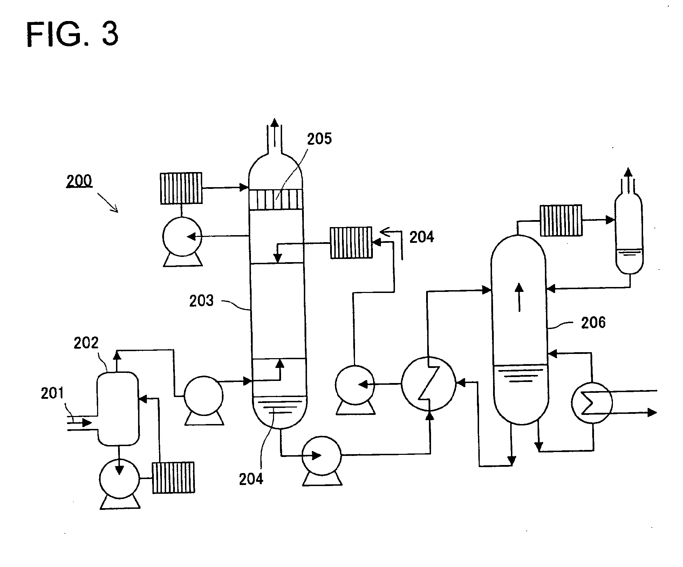

A conventional carbon dioxide recovery system 200 which uses an aqueous amine solution as a liquid absorbent to recover carbon dioxide is shown in Fig. 3.

In the conventional carbon dioxide recovery system 200 shown in Fig. 3, exhaust gas 201 exhausted by burning fossil fuels is introduced into a gas cooling tower 202, cooled therein and guided to an absorber 203. A liquid absorbent 204 is supplied to the upper part of the absorber 203, and the supplied liquid absorbent 204 comes into contact with the introduced exhaust gas 201 and absorbs the carbon dioxide contained in the exhaust gas 201.

The liquid absorbent 204 having absorbed the carbon dioxide is guided from a lower part of the absorber 203 to a regenerator 206. Meanwhile, the exhaust gas 201 from which the carbon dioxide is absorbed is discharged from the top of the absorber 203 into the atmosphere. Because the reaction between the carbon dioxide and the amine is an exothermic reaction, the liquid absorbent 204 evaporates partly in the absorber 203. The evaporated gas includes the amine. In order to prevent the amine from flowing out together with the exhaust gas 201 from which the carbon dioxide is absorbed, a water washing part 205 is disposed at an upper part of the absorber 203, and the exhaust gas 201 from which the carbon dioxide is absorbed and washing water are subject to gas-liquid contact to recover the amine by absorbing it into the washing water.

In the regenerator 206, the liquid absorbent (rich solution) 204 having absorbed the carbon dioxide is heated to remove the absorbed carbon dioxide to regenerate the liquid absorbent (lean solution) 204. The regenerated liquid absorbent (lean solution) 204 is guided again to the absorber 203. Meanwhile, the carbon dioxide removed from the liquid absorbent 204 is recovered by a carbon dioxide recovery part.

In the conventional carbon dioxide recovery system configured as described above, a reflux line for the liquid absorbent 204 is disposed between the absorber 203 and the regenerator 206. Steam of a power generating boiler or the like is used in the regenerator 206 to heat the liquid absorbent 204 instantaneously to a specified temperature to regenerate it, and the regenerated liquid absorbent 204 is returned to the absorber 203.

The above-described conventional carbon dioxide recovery system has a drawback that steam of the power generating boiler is used in a large amount to instantaneously heat the liquid absorbent to a specified temperature in the regenerator.
[Patent Document 1] Japanese Patent Laid-Open Application No. 2002-126439

### SUMMARY OF THE INVENTION

Under the circumstances described above, the present invention provides a system and a method for recovery of carbon dioxide contained in exhaust gas that can remove the carbon dioxide from a liquid absorbent which has absorbed the carbon dioxide without using steam of a power generating boiler.

According to an aspect of the present invention, there is provided a system for recovery of carbon dioxide contained in exhaust gas, comprising a carbon dioxide absorber which is provided with an exhaust gas introduction port, an alkaline liquid absorbent introduction port, a remaining exhaust gas discharge port and an alkaline liquid absorbent discharge port and causes gas-liquid contact between the introduced exhaust gas and alkaline liquid absorbent to absorb carbon dioxide contained in the exhaust gas by the alkaline liquid absorbent; an alkaline liquid absorbent reflux line which returns the alkaline liquid absorbent discharged from the alkaline liquid absorbent discharge port of the carbon dioxide absorber back to the alkaline liquid absorbent introduction port; and a deposition vessel which is interposed in the alkaline liquid absorbent reflux line or connected by a line branched from the alkaline liquid absorbent reflux line, houses the alkaline liquid absorbent, and houses insoluble compounds which are a reaction product of the alkaline liquid absorbent and the carbon dioxide.

According to the system for recovery of the carbon dioxide contained in the exhaust gas, the carbon dioxide deposits as an insoluble compound, and the alkaline liquid absorbent which still has a carbon dioxide absorption capacity is returned to the absorber, so that the regenerator and the steam of the power generating boiler are unnecessary, and thermal efficiency of the system can be improved.

According to another aspect of the present invention, there is provided a method for recovery of carbon dioxide contained in exhaust gas, comprising absorbing the carbon dioxide by an alkaline liquid absorbent by causing gas-liquid contact between the exhaust gas and the alkaline liquid absorbent; increasing an absorption amount by repeatedly causing the gas-liquid contact of the alkaline liquid absorbent with the exhaust gas until a concentration corresponding to that of the carbon dioxide absorbed by the alkaline liquid absorbent reaches a specified value; and depositing insoluble compounds by storing the alkaline liquid absorbent still, when the concentration corresponding to that of the carbon dioxide absorbed by the alkaline liquid absorbent reaches the specified value, to deposit the insoluble compounds which are a reaction product of the alkaline liquid absorbent and the carbon dioxide.

According to the method for recovery of the carbon dioxide contained in the exhaust gas, the carbon dioxide deposits as the insoluble compound, and the alkaline liquid absorbent which still has a carbon dioxide absorption capacity is returned to the absorber, so that the regenerator and the steam of the power generating boiler are unnecessary, and thermal efficiency of the system can be improved.

### Brief Description of the Drawings

Fig. 1 is a general view showing the carbon dioxide recovery system of a first embodiment of the present invention.
FIG. 2 is a general view showing the carbon dioxide recovery system of a second embodiment of the present invention.
FIG. 3 is a general view showing a conventional carbon dioxide recovery system.

### BEST MODE FOR CARRYING OUT THE INVENTION

Embodiments of the present invention will be described with reference to the drawings.

### (First Embodiment)

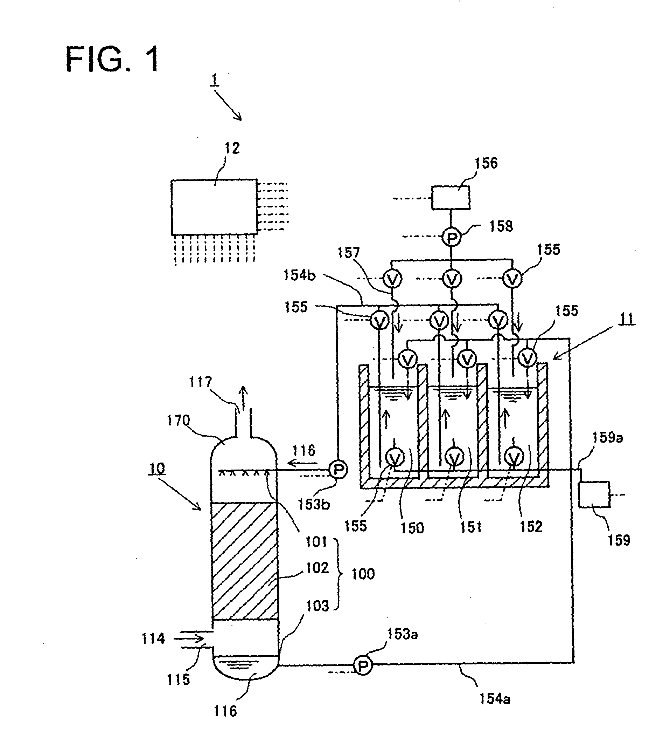

Fig. 1 shows an overview of a carbon dioxide recovery system 1 according to the first embodiment of the present invention. The carbon dioxide recovery system 1 of the first embodiment of the invention is mainly comprised of an absorber 10, a deposition vessel 11, and a control section 12. In Fig. 1, the control section 12 is electrically connected to individual pumps, individual valves and a concentration measuring instrument to be described later, but connection lines are omitted for convenience of clear illustration.

The absorber 10 is provided at its lower part with an exhaust gas supply part 115 for guiding exhaust gas 114 containing carbon dioxide exhausted from thermal power stations, municipal waste incineration plants and the like into the absorber 10. Within the absorber 10 is disposed an absorption section 100 which absorbs the carbon dioxide from the exhaust gas 114 which is introduced from the exhaust gas supply part 115. In addition, the absorber 10 is provided at its top an exhaust port 117 for discharging the exhaust gas 114, from which the carbon dioxide is absorbed by passing through the absorption section 100, into the atmosphere.

The absorption section 100 is provided with a liquid absorbent jetting part 101 which jets a liquid absorbent 116 supplied from the deposition vessel 11 by a pump 153b, a packing 102 which mainly causes gas-liquid contact of the liquid absorbent 116 jetted from the liquid absorbent jetting part 101 and the exhaust gas 114 introduced into the absorber 10, and a liquid absorbent storage part 103 which stores the liquid absorbent 116 dropped from the packing 102.

The liquid absorbent 116 jetted from the liquid absorbent jetting part 101 is preferably jetted uniformly. For example, a spray nozzle or the like capable of providing a specified sprayed particle diameter and spray pattern may be used for the liquid absorbent jetting part 101.

Here, the packing 102 is formed of a filter having, for example, a porous structure, a honeycomb structure or the like, and may have any structure if it disturbs a matter which passes through the packing 102. The absorption section 100 may be configured without having the packing 102 if the gas-liquid contact between the exhaust gas 114 and the liquid absorbent 116 can be made efficiently.

The liquid absorbent storage part 103 is connected to the deposition vessel 11 through a circulation pipe 154a provided with a pump 153a. The pump 153a is electrically connected to the control section 12 and adjusts a flow rate of the liquid absorbent 116 supplied from the liquid absorbent storage part 103 to the deposition vessel 11 according to the signal from the control section 12.

The deposition vessel 11 is comprised of plural split vessels 150, 151, 152 into which the liquid absorbent 116 is supplied from the liquid absorbent storage part 103. The other end of the circulation pipe 154a of which one end is connected to the liquid absorbent storage part 103 is divided into plural in correspondence with the split vessels 150, 151, 152 and disposed in the individual split vessels 150, 151, 152. And, the branched parts of the circulation pipe 154a are provided with a valve 155. The valve 155 is electrically connected to the control section 12 and switches the supply of the liquid absorbent 116 to the individual split vessels 150, 151, 152 according to the signal from the control section 12.

The individual split vessels 150, 151, 152 are provided with a circulation pipe 154b, which has another valve 155 and has its one end branched in correspondence with the individual split vessels 150, 151, 152. The other end of the circulation pipe 154b is connected to the liquid absorbent jetting part 101. The circulation pipe 154b is provided with the pump 153b, which is electrically connected to the control section 12 and adjusts a flow rate of the liquid absorbent 116 supplied from the individual split vessels 150, 151, 152 to the liquid absorbent jetting part 101 according to the signal from the control section 12.

The individual split vessels 150, 151, 152 are provided with a liquid absorbent injection pipe 157 which has a pump 158 for guiding the liquid absorbent 116 supplied from a liquid absorbent replenishing section 156. The pump 158 is electrically connected to the control section 12 and adjusts a flow rate of the liquid absorbent to be supplied to the individual split vessels 150, 151, 152 according to the signal from the control section 12. And, the individual liquid absorbent injection pipes 157 are provided with another valve 155, the valve 155 is electrically connected to the control section 12 and switches the supply of the liquid absorbent 116 to the individual split vessels 150, 151, 152 according to the signal from the control section 12.

In addition, the individual split vessels 150, 151, 152 are provided with a measuring pipe 159a having the valve 155 for guiding the liquid absorbent 116 to a concentration measuring instrument 159 for measuring a concentration of the carbon dioxide absorbed by the liquid absorbent 116. The concentration measuring instrument 159 may be any type if it can measure directly or indirectly the concentration of the carbon dioxide absorbed by the liquid absorbent 116. For example, the concentration measuring instrument 159 may be a pH meter or the like for measuring a pH value correlated with the concentration of the carbon dioxide absorbed by the liquid absorbent 116. The concentration measuring instrument 159 is electrically connected to the control section 12 and outputs a signal based on the measured result to the control section 12.

The liquid absorbent 116 is an aqueous solution having 15-40g of sodium carbonate dissolved into 100g of water. The sodium carbonate may be sodium carbonate containing impurities collected from, for example, coal ash, municipal waste incineration ash, sewage sludge incineration ash, biomass incineration ash and the like. And, the sodium carbonate may also be sodium carbonate containing impurities collected from, for example, soil containing an alkaline component, such as, desert. In addition, the sodium carbonate may be sodium carbonate containing impurities collected from, for example, water of an alkali lake by a process for manufacturing salt by solar evaporation. And, an amine such as glycine may be added to the liquid absorbent 116 to improve the carbon dioxide absorption property.

Then, the action of the carbon dioxide recovery system 1 will be described.

The exhaust gas 114 exhausted from thermal power stations, municipal waste incineration plants and the like is supplied from the exhaust gas supply part 115 into the absorber 10 without removing sulfur oxides. When the exhaust gas 114 is supplied into the absorber 10, the liquid absorbent 116 stored in the deposition vessel 11 is jetted from the liquid absorbent jetting part 101. A flow rate of the liquid absorbent 116 jetted from the liquid absorbent jetting part 101 is adjusted by the pump 153b which is controlled according to the signal from the control section 12.

The liquid absorbent 116 jetted from the liquid absorbent jetting part 101 comes into gas-liquid contact with the exhaust gas 114 flowing from a lower part to an upper part within the packing 102 while flowing down along the packing 102 to absorb carbon dioxide and sulfur dioxide contained in the exhaust gas 114. And, the carbon dioxide is partly discharged into the atmosphere through the exhaust port 117 without being absorbed. The liquid absorbent 116 having absorbed the carbon dioxide flows down and is stored in the liquid absorbent storage part 103.

The liquid absorbent 116 stored in the liquid absorbent storage part 103 is guided to the circulation pipe 154a by the pump 153a and supplied to the split vessel 150 configuring the deposition vessel 11. At this time, the valves 155 other than the valve 155 corresponding to the split vessel 150 into which the liquid absorbent 116 is supplied are closed.

When the liquid absorbent 116 is supplied to the split vessel 150, the valve 155 of the measuring pipe 159a disposed on the split vessel 150 is opened, and the liquid absorbent 116 is partly guided to the concentration measuring instrument 159. The concentration measuring instrument 159 detects a pH value of the guided liquid absorbent 116, and a signal corresponding to the detected value is output to the control section 12.

The control section 12 judges according to the signal from the concentration measuring instrument 159 whether a pH value of the liquid absorbent 116 in the split vessel 150 is in a range of 8-9. Upon absorbing the carbon dioxide contained in the exhaust gas 114, the liquid absorbent 116 becomes an aqueous solution containing sodium carbonate, sodium hydrogencarbonate and the like, and a pH value (9.5-10.5) prior to the jetting from the liquid absorbent jetting part 101 decreases.

When it is judged by the control section 12 that the pH value of the liquid absorbent 116 is larger than 8-9, the liquid absorbent 116 led to the split vessel 150 is guided to the liquid absorbent jetting part 101 and jetted from the liquid absorbent jetting part 101. Thus, the same operation is repeated. At this time, the valves 155 disposed on the circulation pipe 154b are closed except the one corresponding to the split vessel 150.

When it is judged by the control section 12 that the pH value of the liquid absorbent 116 is in a range of 8-9, the control section 12 controls to close the valve 155 which is disposed on the circulation pipe 154a corresponding to the split vessel 150. In the split vessel 150 with the valve 155 closed, the flow of the liquid absorbent 116 is stopped, and insoluble compounds, which are a reaction product of the liquid absorbent 116 and the carbon dioxide, deposit in the liquid absorbent 116. The insoluble compounds are taken out of the split vessel 150. After the insoluble compounds are removed, the control section 12 controls to open the valve 155 of the liquid absorbent replenishing section 156 corresponding to the split vessel 150 and to operate the pump 158. And, the liquid absorbent 116 is supplied to the split vessel 150.

When the pH value of the liquid absorbent 116 stored in the split vessel 150 lowers to about 8-9, the split vessel storing the liquid absorbent 116 is switched to the split vessel 151, and the same operation as that using the above-described split vessel 150 is performed. In addition, when the pH value of the liquid absorbent 116 stored in the split vessel 151 lowers to about 8-9, the split vessel for storing the liquid absorbent 116 is switched to the split vessel 152, and the same operation as that using the above-described split vessel 150 is performed.

When the liquid absorbent 116 is used for a long period, sulfite ions accumulate in the liquid absorbent 116. For example, when the concentration of sulfite ions contained in the liquid absorbent 116 in the split vessel 150 reaches a specified value, calcium chloride is added to the split vessel 150, sulfite ions become calcium sulfite and deposit, and carbonate ions become calcium carbonate and deposit. The remaining aqueous solution is removed, and a fresh liquid absorbent 116 is supplied from the liquid absorbent replenishing section 156.

As described above, in the carbon dioxide recovery system 1 of the present invention, the carbon dioxide is recovered as the insoluble compound, and the liquid absorbent 116 is replenished but not regenerated. Therefore, thermal energy for regeneration of the liquid absorbent 116 becomes unnecessary, and the thermal efficiency of the system can be improved. Besides, sulfur dioxide which is an air pollutant can also be recovered.

The present invention can recover a large amount of carbon dioxide exhausted from thermal power stations, municipal waste incineration plants and the like without consuming excessive energy and can contribute to prevention of global warming. In addition to sodium carbonate, inexpensive sodium carbonate containing impurities can be used to fix carbon dioxide as value-added sodium hydrogencarbonate.

Besides, the present invention can easily produce a liquid absorbent for absorbing carbon dioxide by using coal ash or the like to be disposed, so that a production cost is low, and the liquid absorbent 116 is mass-produced with ease and can be supplied in a large amount continuously. And, the coal ash or the like used for production of the liquid absorbent 116 has alkaline components mostly removed. Therefore, even if it is disposed of in landfills and exposed to rain water and the like, elution of the alkaline components is limited to a very small level, and its effect on the environment is very little.

Where sodium carbonate produced from water of an alkali lake is used for the liquid absorbent 116, a production cost is low, and the liquid absorbent 116 can be mass-produced easily, and the liquid absorbent 116 can be supplied continuously in a large amount to the absorber and the like in the same way as the case that coal ash or the like is used. Because the sodium carbonate is normally present in nature, it does not largely affect on the environment even if it leaks during transportation. Thus, safety can be enhanced in view of environment conservation.

In addition, where an alkaline component which is eluted from soil containing the alkaline component is used for the liquid absorbent 116, a production cost is low, and the liquid absorbent 116 can be mass-produced easily, and the liquid absorbent 116 can be supplied continuously in a large amount to the absorber 10 and the like in the same way as the case that coal ash or the like is used. In addition, because the alkaline component which harms the agriculture is removed from soil, greening of the desert and the like can be assisted.

### (Second Embodiment)

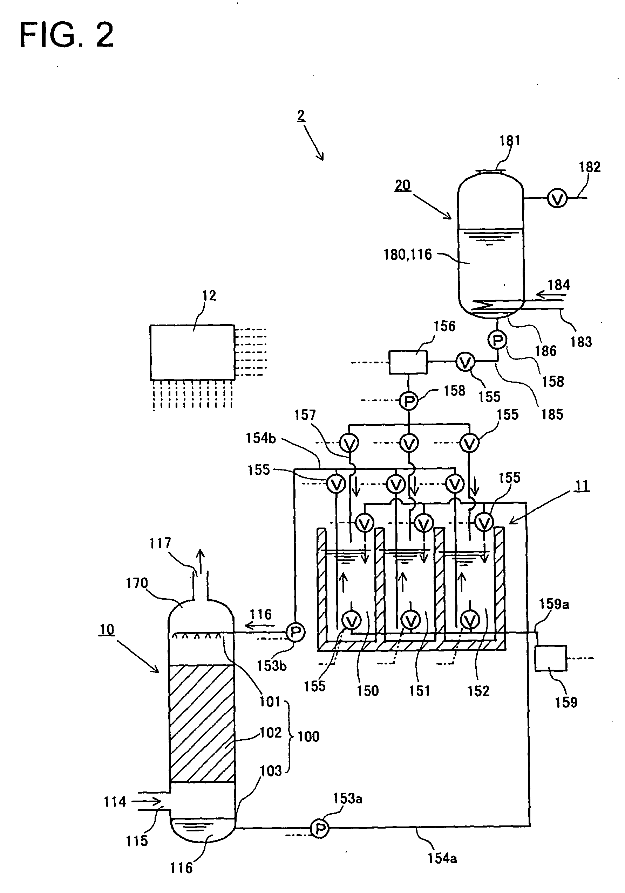

Fig. 2 is a general view of a carbon dioxide recovery system 2 with a regenerator 20, which regenerates the liquid absorbent 116 by heating insoluble compounds 180, added to the carbon dioxide recovery system 1 of the first embodiment of the present invention. Like parts as those of the carbon dioxide recovery system 1 of the first embodiment are denoted by like reference numerals, and overlapped descriptions will be omitted.

A charging port 181 for the insoluble compounds 180, which are a reaction product of the liquid absorbent 116 and the carbon dioxide, and a carbon dioxide outlet line 182 are disposed on upper parts of the regenerator 20, and a hot water pipe 183 is disposed at a lower part of the regenerator 20. The regenerator 20 is not connected to the circulation pipes 154a, 154b. And, a liquid absorbent supply pipe 185 having the pump 158 and the valve 155, which are connected to the liquid absorbent replenishing section 156, is connected to the bottom of the regenerator 20. A filter 186 is disposed on the bottom of the regenerator 20 and has a mesh of a level not allowing the insoluble compounds 180 to pass through it.

It is not shown in Fig. 2 but, for example, an insoluble compound supply pipe having a pump and a valve is disposed between the bottoms of the individual split vessels 150, 151, 152 and the regenerator 20 to guide the insoluble compounds 180 which are deposited on the bottoms of the individual split vessels 150, 151, 152 to the regenerator 20.

Then, an example operation of the carbon dioxide recovery system 2 will be described.

When it is judged by the control section 12 according to the signal from the concentration measuring instrument 159 that the liquid absorbent 116 has a pH value in a range of 8-9, the liquid absorbent 116 containing the insoluble compounds 180 is supplied from the split vessel 150 of the deposition vessel 11 to the regenerator 20 through an insoluble compound supply pipe (not shown). At this time, the valve of the liquid absorbent supply pipe 185 disposed at the bottom of the regenerator 20 is open.

And, the liquid absorbent 116 containing the insoluble compounds 180 supplied to the regenerator 20 is separated into the liquid absorbent 116 and the insoluble compounds 180 by the bottom filter 186 of the regenerator 20, and the liquid absorbent 116 having passed through the filter 186 is returned to the split vessel 150 by the liquid absorbent replenishing section 156. And, the valve 155 of the liquid absorbent supply pipe 185 is closed in a state that a small amount of the liquid absorbent 116 is present in the regenerator 20 to stop the supply of the liquid absorbent 116 containing the insoluble compounds 180 to the regenerator 20.

Subsequently, hot water 184 is guided through the hot water pipe 183. For example, when the liquid absorbent 116 is an aqueous solution of sodium carbonate and the insoluble compound 180 is sodium hydrogencarbonate containing a small amount of water, the hot water 184 is set to a temperature of 70-90°C.

The insoluble compound 180 (sodium hydrogencarbonate containing a small amount of water) starts to discharge carbon dioxide when its temperature is increased to 60-80°C by the hot water 184 and is divided into carbon dioxide and an absorbent (sodium carbonate and a small amount of water). The regenerated absorbent dissolves in a specified amount of water to form the liquid absorbent 116, which is supplied to the liquid absorbent replenishing section 156 through the liquid absorbent supply pipe 185. Meanwhile, carbon dioxide discharged in the regenerator 20 is collected through the carbon dioxide outlet line 182.

The carbon dioxide recovery system 2 performs repeatedly the regeneration of the liquid absorbent 116 and the deposition of the insoluble compound 180.

The supply of the insoluble compounds 180 from the individual split vessels 150, 151, 152 to the regenerator 20 is not limited to the above-described method. For example, the insoluble compounds 180 can also be guided from the individual split vessels 150, 151, 152 to the regenerator 20 by the following method. The following method does not need the filter 186 which is disposed on the bottom of the regenerator 20.

An insoluble compound supply pipe (not shown) having a pump and a valve is disposed between the bottoms of the individual split vessels 150, 151, 152 and the regenerator 20. A filter (not shown) of which both sides are reversible with respect to the flow is disposed at a specified part of the insoluble compound supply pipe. And, a return pipe (not shown) having a valve which is branched from the insoluble compound supply pipe is disposed near the regenerator 20 in relation to the filter-disposed position and branched so to be disposed at the individual split vessels 150, 151, 152.

In this case, when it is judged by the control section 12 according to the signal from the concentration measuring instrument 159 that the liquid absorbent 116 has a pH value in a range of 8-9, the liquid absorbent 116 containing the insoluble compounds 180 is supplied from the split vessel 150 of the deposition vessel 11 to the regenerator 20 through the insoluble compound supply pipe.

To guide the insoluble compounds 180 from the bottoms of the individual split vessels 150, 151, 152 to the regenerator 20, the liquid absorbent 116 present in the individual split vessels 150, 151, 152 is also guided together with the insoluble compounds 180 through the insoluble compound supply pipe. The liquid absorbent 116 containing the insoluble compounds 180 is passed through a filter which is disposed within the insoluble compound supply pipe to separate the insoluble compounds 180 and the liquid absorbent 116. And, the liquid absorbent 116 having passed through the filter is returned to the individual split vessels 150, 151, 152 through the return pipe. At this time, the valve disposed between the regenerator 20 and the branched point of the return pipe of the insoluble compound supply pipe is closed. Meanwhile, the insoluble compounds 180 collected by the filter are guided to the regenerator 20 by the flow of the liquid absorbent 116 by, for example, closing the valve disposed on the return pipe, reversing the direction of the filter and flowing the liquid absorbent 116 from the individual split vessels 150 to the filter.

The method of guiding the insoluble compounds 180 from the individual split vessels 150, 151, 152 to the regenerator 20 is not limited to the above-described one. Another method of scooping the insoluble compounds 180 from the individual split vessels 150, 151, 152 and supplying to the regenerator 20 through the charging port 181 disposed at the top of the regenerator 20 can also be adopted.

As described above, the carbon dioxide recovery system 2 of the present invention absorbs the carbon dioxide contained in the exhaust gas in the same way as the carbon dioxide recovery system 1 of the first embodiment and can use waste heat without necessity of using steam of the power generating boiler for instantaneously heating the insoluble compounds 180. Thus, the thermal efficiency of the system can be improved. Besides, the insoluble compounds 180 and the absorbent as the material for the liquid absorbent 116 can be purified by repeating the deposition and heating of the insoluble compounds 180. For example, high-purity sodium carbonate or sodium hydrogencarbonate can be obtained from sodium carbonate containing impurities.

The embodiments of the present invention were described above with reference to the examples. It is to be understood that the present invention is not limited to the specific embodiments thereof, and various modifications may be made without deviating from the spirit and scope of the invention.

### INDUSTRIAL APPLICABILITY

The system and the method for recovery of carbon dioxide contained in exhaust gas according to the present invention can be used for a carbon dioxide recovery system or the like that recovers carbon dioxide contained in exhaust gas exhausted from thermal power stations, municipal waste incineration plants and the like. Therefore, the present invention has industrial applicability.

## Claims

1. A system for recovery of carbon dioxide contained in exhaust gas, comprising:
a carbon dioxide absorber which is provided with an exhaust gas introduction port, an alkaline liquid absorbent introduction port, a remaining exhaust gas discharge port and an alkaline liquid absorbent discharge port and causes gas-liquid contact between the introduced exhaust gas and alkaline liquid absorbent to absorb carbon dioxide contained in the exhaust gas by the alkaline liquid absorbent;
an alkaline liquid absorbent reflux line which returns the alkaline liquid absorbent discharged from the alkaline liquid absorbent discharge port of the carbon dioxide absorber back to the alkaline liquid absorbent introduction port; and
a deposition vessel which is interposed in the alkaline liquid absorbent reflux line or connected by a line branched from the alkaline liquid absorbent reflux line, houses the alkaline liquid absorbent, and houses insoluble compounds which are a reaction product of the alkaline liquid absorbent and the carbon dioxide.

2. The system for recovery of carbon dioxide contained in exhaust gas according to claim 1, further comprising:
a concentration measuring device which measures a concentration corresponding to that of the carbon dioxide absorbed by the alkaline liquid absorbent; and
a control device which controls the alkaline liquid absorbent reflux line according to the concentration corresponding to that of the carbon dioxide absorbed into the alkaline liquid absorbent measured by the concentration measuring device.

3. The system for recovery of carbon dioxide contained in exhaust gas according to claim 1, further comprising:
a regenerator into which the insoluble compounds are supplied and which heats the insoluble compounds to discharge carbon dioxide, and collects the carbon dioxide to regenerate the carbon dioxide absorption capacity of the alkaline liquid absorbent.

4. The system for recovery of carbon dioxide contained in exhaust gas according to claim 1, wherein the alkaline liquid absorbent is an aqueous solution of sodium carbonate.

5. The system for recovery of carbon dioxide contained in exhaust gas according to claim 1, wherein the alkaline liquid absorbent is an aqueous solution of sodium carbonate containing impurities.

6. The system for recovery of carbon dioxide contained in exhaust gas according to claim 1, wherein the insoluble compounds are sodium hydrogencarbonate.

7. A method for recovery of carbon dioxide contained in exhaust gas, comprising:
absorbing the carbon dioxide by an alkaline liquid absorbent by causing gas-liquid contact between the exhaust gas and the alkaline liquid absorbent;
increasing an absorption amount by repeatedly causing the gas-liquid contact of the alkaline liquid absorbent with the exhaust gas until a concentration corresponding to that of the carbon dioxide absorbed by the alkaline liquid absorbent reaches a specified value; and
depositing insoluble compounds by storing the alkaline liquid absorbent still, when the concentration corresponding to that of the carbon dioxide absorbed by the alkaline liquid absorbent reaches the specified value, to deposit the insoluble compounds which are a reaction product of the alkaline liquid absorbent and the carbon dioxide.

8. The method for recovery of carbon dioxide contained in exhaust gas according to claim 7, further comprising:
regenerating the alkaline liquid absorbent by heating the insoluble compounds to discharge carbon dioxide.

9. The method for recovery of carbon dioxide contained in exhaust gas according to claim 8, wherein the absorbing step, the absorption amount increasing step, the insoluble compound deposition step and the regenerating step are repeated sequentially.
